(19) Europäisches Patentamt
European Patent Office
Office européen des brevets

(11) EP 0 346 772 B1

(12) # EUROPÄISCHE PATENTSCHRIFT

(45) Veröffentlichungstag und Bekanntmachung des Hinweises auf die Patenterteilung:
**28.02.1996 Patentblatt 1996/09**

(21) Anmeldenummer: **89110486.1**

(22) Anmeldetag: **09.06.1989**

(51) Int Cl.[6]: **C08K 5/00**, C08K 13/02, G11B 7/24
// (C08K5/00, 5:00, 5:39), (C08K13/02, 3:00, 5:39)

(54) **Verwendung einer Masse zur Herstellung eines im nahen IR absorbierenden Materials und das Material enthaltender Formkörper**

Use of a composition for preparing a near IR absorbing material, and mouldings containing this material

Utilisation d'une composition pour préparer un matériau absorbant le rayonnement IR proche et des masses à mouler contenant ce matériau

(84) Benannte Vertragsstaaten:
**BE DE FR GB IT SE**

(30) Priorität: **13.06.1988 JP 145262/88**
**16.09.1988 JP 232075/88**

(43) Veröffentlichungstag der Anmeldung:
**20.12.1989 Patentblatt 1989/51**

(73) Patentinhaber:
**NIPPON PAPER INDUSTRIES CO., LTD.**
**Kita-ku, Tokyo 100 (JP)**

(72) Erfinder:
- **Satake, Toshimi**
  **CENTRAL RESEARCH LABORATORY**
  **Tokyo (JP)**
- **Nagai, Tomoaki**
  **CENTRAL RESEARCH LABORATORY**
  **Tokyo (JP)**
- **Yokoyama, Miyuki**
  **CENTRAL RESEARCH LABORATORY**
  **Tokyo (JP)**

(74) Vertreter: **Kinzebach, Werner, Dr. et al**
**D-81633 München (DE)**

(56) Entgegenhaltungen:
**GB-A- 1 202 881**

- **CHEMICAL ABSTRACTS, Band 86, Nr. 18, 2. Mai 1977, Seite 662, Zusammenfassung Nr. 131138z, Columbus, Ohio, US**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 346 772 B1

Printed by Jouve, 75001 PARIS (FR)

**Beschreibung**

Diese Erfindung betrifft die Verwendung einer im nahen IR absorbierende Masse, die mindestens eine Thioharnstoffverbindung und mindestens eine Kupferverbindung und oder Bleiverbindung enthält, zur Herstellung eines nach Hitzebehandlung im nahen IR absorbierendes Material, und eines Formkörpers, der diese Masse oder dieses Material enthält.

Die im nahen IR absorbierenden Materialien wurden in den letzten Jahren besonders entwickelt. Diese Materialien werden vielfältig in der Praxis verwendet, z.B. als lichtempfindliche Materialien, bei denen ein Halbleiterlaser mit einer Wellenlänge im nahen IR-Bereich, usw. als Lichtquelle verwendet wird; als Informationsaufzeichnungsmaterialien wie optische Aufzeichnungsscheiben; als optische Materialien wie Filter und Filme für das nahe IR usw; als Material für die Abschirmung thermischer Strahlen.

Als bekannte im nahen IR absorbierende Materialien werden ein Chrom-Kobalt-Komplex in der JP-A-42269/1985 beschrieben; ein ThiolNickel-Komplex in JP-A-21294/1985; ein Anthrachinonderivat in JP-A-115958/1986; eine neue Squaryliumverbindung mit einer Maximumwellenlänge von 700-800 nm in JP-A-218551/1986. Weiter werden in "Im nahen IR absorbierender Farbstoff" (Kagakukogyo 43, Mai 1959) Nitrosoverbindungen, ihre Metallkomplexe, Polymethinfarbstoffe (Cyaninfarbstoffe), Thiol-Kobaltkomplexe, Thiol-Platin-Komplexe, Thio-Palladiumkomplexe, Phthalocyaninfarbstoffe, Triarylmethanfarbstoffe, Immoniumfarbstoffe, Diimmoniumfarbstoffe, Naphthochinonfarbstoffe und dergleichen beschrieben.

Die bisherigen, im nahen IR absorbierenden Materialien des organischen Typs haben den Nachteil, daß die Dauerhaftigkeit unterlegen ist; d.h. daß die Anfangseigenschaften unter dem Einfluß der Umweltbedingungen oder im Lauf der Zeit verschlechtert werden. Andererseits weisen die im nahen IR absorbierenden Materialien des Komplextyps eine überlegene Dauerhaftigkeit auf, sie haben jedoch den Nachteil, daß wegen der Absorption des sichtbaren Lichts die Materialien stark gefärbt sind, wodurch die Materialien nur beschränkt anwendbar sind. Jedes Material hat ein Absorptionsmaximum bei einer bestimmten Wellenlänge, besitzt aber fast keine Absorptionsfähigkeit bei anderen Wellenlängen. Bei einem Aufzeichnungsmaterial, bei dem das obige Material verwendet wird und als Lichtquelle beispielsweise ein Laserlicht mit einer Wellenlänge im nahen IR angewandt wird, ist es erforderlich, daß die Laserwellenlänge mit dem Absorptionsmaximum des Materials übereinstimmt. Weil die Laserwellenlänge und die Absorptionsmaterialwellenlänge beschränkt sind, sind die Kombinationsmöglichkeiten, bei denen die Laserwellenlänge und die Absorptionsmaterialwellenlänge übereinstimmen, sehr gering. Weiter sind derartige Kombinationsmöglichkeiten unter Berücksichtigung von Absorptionsfähigkeit, Dauerhaftigkeit, Färbung, Kosten usw. des Aufzeichnungsmaterials praktisch fast nicht vorhanden. Daher sind diese Materialien nur beschränkt anwendbar.

Die JP-A-141,639/1976 beschreibt ein thermographisches Aufzeichnungsmaterial das (A) ein Salz eines Metalles, ausgewählt unter Zinn, Kobalt, Nickel und Blei, und einer Säure ausgewählt unter Silizium-, Bor- und Phosphoroxysäuren und organischen Carbonsäuren mit 12 oder weniger Kohlenstoffatomen; (B) ein Thiosulfat eines Metalls, das weniger edel als Zinn ist und (C) eine organische Verbindung, welche die Thioharnstoffeinheit und wenigstens ein reaktives Wasserstoffatom enthält, umfaßt. Bei Verwendung des Materials in einem ThermofaxKopierer erhält man eine scharfe braune Kopie mit gutem Kontrast.

Die GB-A-1 202 881 beschreibt lichtempfindliche Zusammensetzungen, welche ein Silberhalogenid, das wenigstens zum Teil aus Silberbromid besteht, Kupfer-I-Jodid und einen organischen Halogenakzeptor, bei dem es sich um eine Verbindung mit einer Thioharnstoffgruppe handelt, umfassen. Diese Zusammensetzungen sind zur Herstellung photographischer Materialen brauchbar.

Der vorliegenden Erfindung liegt die Aufgabe zugrunde, ein im nahen IR absorbierendes Material und einen im nahen IR absorbierenden Formkörper zur Verfügung zu stellen, welche beim Erhitzen in nur geringem Umfang eine Farbe entwickeln, von hoher Dauerhaftigkeit sind und eine gleichmäßige Absorption im nahen IR-Bereich von 700-2000 nm Wellenlänge besitzen.

Diese Aufgaben werden gelöst durch die Verwendung einer Masse zur Herstellung eines nach Hitzebehandlung im nahen IR absorbierenden Materials, die sowohl mindestens eine Thioharnstoffverbindung der allgemeinen Formel (I)

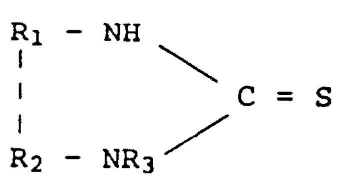

(I)

(worin $R_1$, $R_2$ und $R_3$ jeweils ein Wasserstoffatom,eine Alkyl-, Cycloalkyl-, Aryl-, Aralkyl- Alkenylgruppe, oder einwertigen Rest eines 5 oder 6-gliedrigen Rings bedeuten, wobei jede Gruppe durch mindestens einen Substituenten substituiert sein kann, oder $R_1$ und $R_2$ oder $R_2$ und $R_3$ gemeinsam einen Ring bilden können) als auch mindestens eine Kupfer-

und/oder Bleiverbindung enthält.

Das erfindungsgemäß im nahen IR absorbierende Material umfaßt das Reaktionsprodukt, das durch die Hitzebehandlung der Masse erhalten wird. Der erfindungsgemäße Formkörper umfaßt das erfindungsgemäße Material, erhältlich durch Hitzebehandlung der Masse.

Die Wahl der Thioharnstoffverbindungen der allgemeinen Formel (I) ist nicht besonders beschränkt, man kann z.B. folgende verwenden:

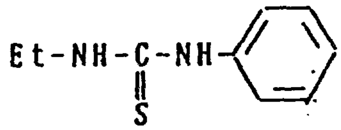

1-Äthyl-3-phenylthioharnstoff

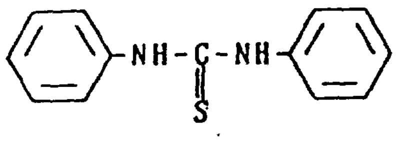

1,3-Diphenylthioharnstoff

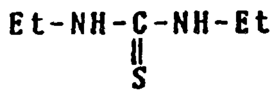

1,3-Diäthylthioharnstoff

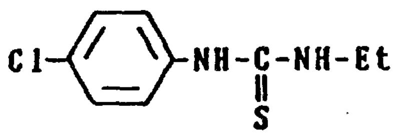

1-Äthyl-3-p-chlorphenylthioharnstoff

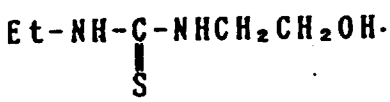

1-Äthyl-3-(2-hydroxyäthyl)thioharnstoff

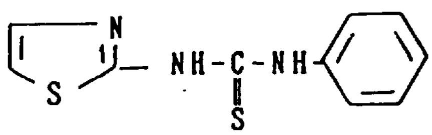

1-(2-Thiazolyl)-3-phenylthioharnstoff

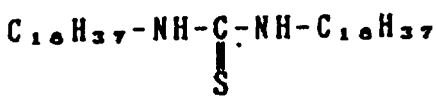

1,3-Distearylthioharnstoff

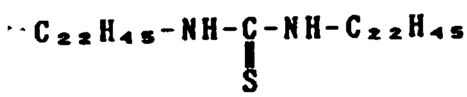

1,3-Dibehenylthioharnstoff

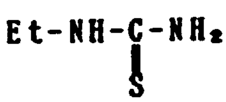

1-Äthylthioharnstoff

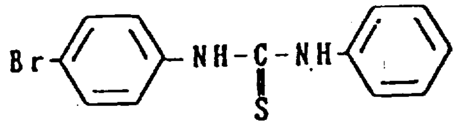

1-p-Bromphenyl-3-phenylthioharnstoff

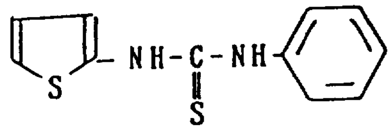

1-(2-Thiophenyl)-3-phenylthioharnstoff

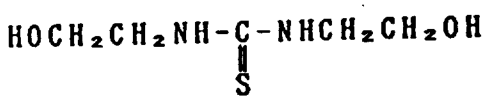

1,3-Bis(hydroxyäthyl)thioharnstoff

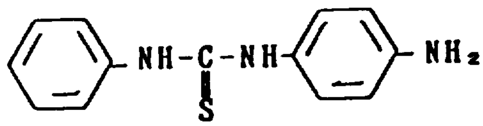

1-p-Aminophenyl-3-phenylthioharnstoff

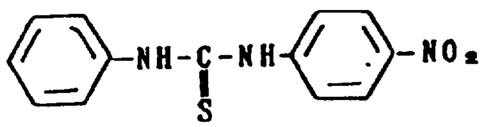

1-p-Nitrophenyl-3-phenylthioharnstoff

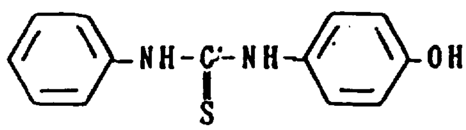

1-p-Hydroxyphenyl-3-phenylthioharnstoff

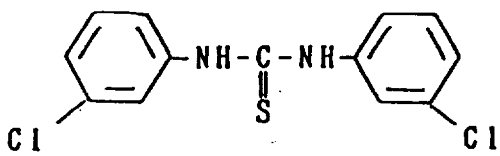

1,3-Di-m-chlorphenylthioharnstoff

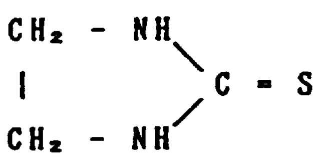

Äthylenthioharnstoff

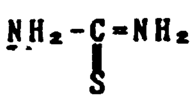

Thioharnstoff

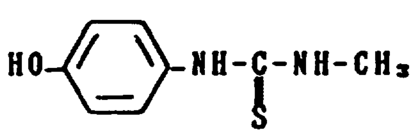

1-Methyl-3-p-hydroxyphenylthioharnstoff

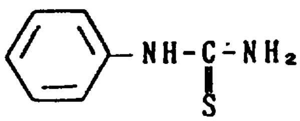

1-Phenylthioharnstoff

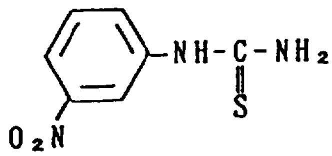

1-m-Nitrophenylthioharnstoff

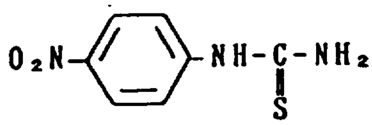

1-p-Nitrophenylthioharnstoff

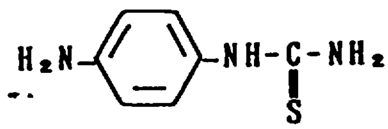

1-p-Aminophenylthioharnstoff

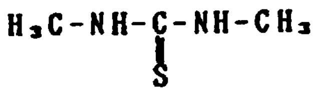

1,3-Dimethylthioharnstoff

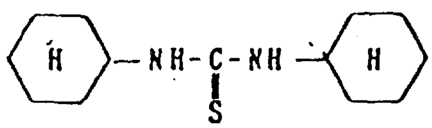

1,3-Dicyclohexylthioharnstoff

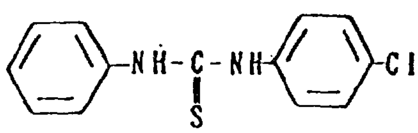

1-Phenyl-3-p-chlorphenylthioharnstoff

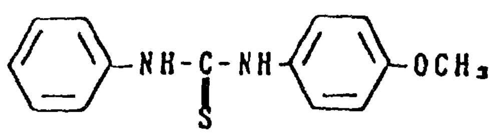

1-Phenyl-3-p-methoxyphenylthioharnstoff

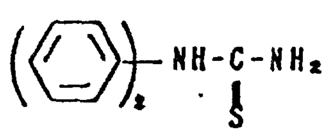

1.1-Diphenylthioharnstoff

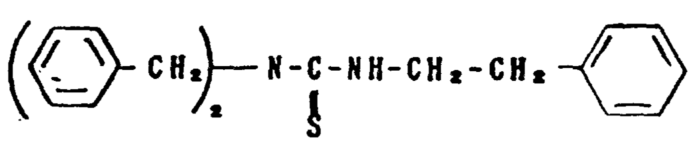

1,1-Dibenzyl-3-phenäthylthioharnstoff

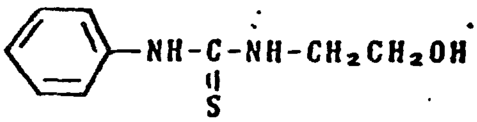

1-Phenyl-3-(2-hydroxyäthyl)thioharnstoff

Die erfindungsgemäße Kupferverbindung ist eine Kupferverbindung der Formel (II)

$$(R - X)_n Cu \qquad (II)$$

worin R ein Wasserstoffatom, eine Alkyl-, Cycloalkyl-, Aryl-, Aralkylgruppe oder ein heterocyclischer Rest (wobei jede Gruppe oder der Rest durch mindestens einen Substituenten substituiert sein kann), X -COO, $-SO_4$, $-SO_3$, $-PO_4$, oder -O bedeutet, n eine ganze Zahl von 1 bis 4 ist.

Die Wahl der erfindungsgemäßen Kupferverbindungen der allgemeinen Formel (II) ist nicht besonders beschränkt, man kann z.B. folgende verwenden: Kupferstearat, Kupferpalmitat, Kupferoleat, Kupferbehenat, Kupferlaurat, Kupfercaprat, Kupfercapronat, Kupfervalerianat, Kupferisolaktat, Kupferlaktat, Kupferpropionat, Kupferacetat, Kupferformat, Kupferhydroxid, Kupferbenzoat, Kupfer-o-toluylat, Kupfer-m-toluylat, Kupfer-p-toluylat, Kupfer-p-tert.-butylbenzoat, Kupfer-o-chlorbenzoat, Kupfer-m-chlorbenzoat, Kupfer-p-chlorbenzoat, Kupferdichlorbenzoat, Kupfertrichlor benzoat, Kupfer-p-brombenzoat, Kupfer-p-jodbenzoat, Kupfer-p-phenylbenzoat, Kupfer-o-benzoylbenzoat, Kupfer-p-nitrobenzoat, Kupferanthranilat, Kupfer-p-aminobenzoat, Kupferoxalat, Kupfermalonat, Kupfersuccinat, Kupferglutarat, Kupferadipat, Kupferpimelat, Kupfersuberat, Kupferazelat, Kupfersebacinat, Kupferphthalat, Kupfermonoesterphthalat, Kupfernaphthenat, Kupfernaphthalincarbonat, Kupfertartrat, Kupferdiphenylamin-2-carboxylat, Kupfer-4-cyclohexyllaktat, Kupferdiäthyldithiocarbamat, Kupferglukonat, Diäthoxykupfer, Di-isopropoxykupfer, Di-n-butoxykupfer, Kupferoctylat, Kupferalkylbenzolsulfonat, Kupfer-p-toluolsulfonat, Kupfernaphthalinsulfonat, Kupfernaphthylaminsulfonat, Kupfer-n-dodecylbenzolsulfonat, Kupferdodecylsulfat, Kupfer-2,5-dimethylbenzolsulfonat, Kupfer-2-carbomethoxy-5-methylbenzolsulfonat, Kupfer-α-naphthylphosphat, Kupferstearylphosphat, Kupferlaurylphosphat, Kupfer-di-2-äthylhexylphosphat, Kupferisodecylphosphat, und dergleichen.

Die erfindungsgemäße Bleiverbindung ist eine Bleiverbindung der Formel (III)

$$(R - X)_n Pb \qquad (III)$$

worin R ein Wasserstoffatom, eine Alkyl-, Cycloalkyl-, Aryl-, Aralkylgruppe oder ein heterocyclischer Rest (wobei jede Gruppe oder der Rest durch mindestens einen Substituenten substituiert werden kann),X -COO, $-SO_4$, $-SO_3$, $-PO_4$, oder -O bedeutet, n eine ganze Zahl von 1 bis 4 ist.

Die Wahl der erfindungsgemäßen Bleiverbindungen der allgemeinen Formel (III) ist nicht besonders beschränkt, man kann z.B. folgende verwenden:

Bleistearat, Bleipalmitat, Bleioleat, Bleibehenat, Bleilaurat, Bleicaprat, Bleicapronat, Bleivalerianat, Bleiisolaktat, Bleillaktat, Bleipropionat, Bleiacetat, Bleiformat, Bleihydroxid, Bleibenzoat, Blei-o-toluylat, Blei-m-toluylat, Blei-p-toluylat, Blei-p-tert.-butylbenzoat, Blei-o-chlorbenzoat, Blei-m-chlorbenzoat, Blei-p-chlorbenzoat, Bleidichlorbenzoat, Bleitrichlor benzoat, Blei-p-brombenzoat, Blei-p-jodbenzoat, Blei-p-phenylbenzoat, Blei-o-benzoylbenzoat, Blei-p-nitrobenzoat, Bleianthranilat, Blei-p-aminobenzoat, Bleioxalat, Bleimalonat, Bleisuccinat, Bleiglutarat, Bleiadipat, Bleipimelat, Bleisuberat, Bleiazelat, Bleisebacinat, Bleiphthalat, Bleimonoesterphthalat, Bleinaphthenat, Bleinaphthalincarbonat, Bleitartrat, Bleidiphenylamin-2-carboxylat, Blei-4-cyclohexyllaktat, Bleidiäthyldithiocarbamat, Bleiglukonat, Diäthoxyblei, Di-isopropoxyblei, Di-n-butoxyblei, Bleioctylat, Bleialkylbenzolsulfonat, Blei-p-toluolsulfonat, Bleinaphthalinsulfonat, Bleinaphthylaminsulfonat, Blei-n-dodecylbenzolsulfonat, Bleidodecylsulfat, Blei-2,5-dimethylbenzolsulfonat, Blei-2-carbomethoxy-5-methylbenzolsulfonat, Blei-α-naphthylphosphat, Bleistearylphosphat, Bleilaurylphosphat, Blei-di-2-äthylhexylphosphat, Bleiisodecylphosphat, und dergleichen.

In den Formeln I, II und III können Alkyl, Alkenyl, Alkoxy etc. geradkettig oder verzweigt sein. Vorzugsweise steht Alkyl für $C_1$-$C_{30}$-Alkyl, insbesondere $C_1$-$C_{25}$-Alkyl. Beispiele sind Methyl, Ethyl, n- und i-Propyl, Butyl, Stearyl oder Behenyl.

Cycloalkyl steht vorzugsweise für Cyclopentyl oder Cyclohexyl.

Aryl bedeutet vorzugsweise Phenyl oder Naphthyl, Aralkyl steht vorzugsweise für Phenyl-$C_1$-$C_4$-Alkyl, wie Benzyl oder Phenylethyl.

Alkenyl steht vorzugsweise für $C_2$-$C_6$-Alkenyl, insbesondere $C_2$-$C_4$-Alkenyl.

Bei den heterocyclischen Resten handelt es sich vorzugsweise um 5- oder 6-gliedrige Ringe mit einem oder mehreren Sauerstoff-, Schwefel- oder Stickstoff-Heteroatomen, wie Thiazolyl, Thienyl, Furyl, Pyrrolidinyl, Pyrrolyl, Morpholinyl, Piperazinyl, Piperidinyl oder Pyridinyl.

Wenn $R_1$ und $R_2$ oder $R_2$ und $R_3$ gemeinsam einen Ring bilden, stehen sie vorzugsweise für Ethylen, Propylen oder

Butylen.

Bevorzugte Substituenten der in den Formeln I, II und III vorhandenen Reste sind geradkettiges oder verzweigtes $C_1$-$C_{18}$-Alkyl (wie Methyl, Ethyl, n- und i-Propyl, n-, i- und t-Butyl, Dodecyl etc.), $C_1$-$C_4$-Alkoxy, Hydroxy, Halogen (F, C1, Br, J), Nitro, Amino, Phenyl, Cyclopentyl, Cyclohexyl, Benzoyl, Acetyl.

Entweder die obige Thioharnstoffverbindung oder die obige Kupfer- oder Bleiverbindung absorbiert nahes IR-Licht fast nicht oder nur eine bestimmte Wellenlänge. Eine Hitzebehandlung der Thioharnstoffverbindung oder der Kupfer- oder Bleiverbindung übt keinen Einfluß auf die Absorption im nahen IR aus. Aber das Gemisch aus dieser Thioharnstoffverbindung und dieser Kupfer- und/oder Bleiverbindung nimmt nach seiner Hitzebehandlung nahes IR-Licht stark und gleichmäßig auf.

Ohne Hitzebehandlung nimmt das Gemisch aus einer Thioharnstoffverbindung der allgemeinen Formel (I) und wenigstens einer Verbindung aus der Gruppe der Verbindungen der allgemeinen Formel (II), der Verbindungen der allgemeinen Formel (III), Kupfer- und Bleiacetylacetonate, Chlorophyll-Kupfer und -Blei und Chlorophyllin-Kupfer und -Blei fast kein nahes IR-Licht auf.

Wenn man die Masse oder die diese Masse enthaltenden Formkörper vollständig oder teilweise (abschnittsweise) durch Zufuhr von Wärmeenergie behandelt, nimmt der erhitzte Teil das nahe IR-Licht stark auf. Der erhitzte Teil nimmt kein Licht im sichtbaren Wellenlängenbereich auf und produziert ein latentes Bild (eines durch Erhitzen erzeugten Musters).

Daher kann man unter der Verwendung des obigen Phänomens einen Detektor für das durch Erhitzen erzeugte Muster und in Kombination mit einem geeigneten Entwicklungsgerät ein Aufzeichnungspapier herstellen.

Weil das erfindungsgemäße Material, das durch die Hitzebehandlung der ein Gemisch aus Thioharnstoffverbindung und aus Kupfer- und/oder Bleiverbindung enthaltenden Masse erhalten wird, das Licht im nahen IR-Bereich stark absorbiert, kann es Verwendung bei der Herstellung eines Detektors für nahes IR-Licht und bei der Herstellung der Mittel für das Aufzeichnungssystem des Laserstrahls finden.

Die Stärke der Absorption im nahen IR kann durch die Art und das Mischverhältnis von Thioharnstoffverbindung und Kupfer- und/oder Bleiverbindung, Erhitzungstemperatur und -zeit usw. eingestellt werden.

Die Masse wird hergestellt, indem man die Thioharnstoffverbindung und die Kupfer- und/oder Bleiverbindung in einem geeigneten Mischungsverhältnis vermischt, oder indem man die Thioharnstoffverbindung, die Kupfer- und/oder Bleiverbindung, ein Bindemittel, Zellstoff, Holzschliff, thermoplastisches Harzpulver usw. und gegebenenfalls Additive wie Farbstoffe usw. vermischt.

Weiter kann die Masse hergestellt werden, indem man das Gemisch aus allen Rohstoffen in einem geeigneten Lösungsmittel oder einer geeigneten Dispersion auflöst, oder indem man alle Rohstoffe außer Bindemittel, Farbstoff, usw. in einem Lösungsmittel auflöst, in dem Bindemittel, Färbungsmittel, usw. dispergiert oder aufgelöst sind.

Die Masse kann beispielsweise eine Beschichtungsmasse, Füllstoff usw. sein. Das Mischverhältnis, der Massegehalt im Formkörper und die Zugabemenge anderer Stoffe werden so festgelegt, daß beim Erhitzen die Thioharnstoffverbindung und die Kupfer- und/oder Bleiverbindung als Feststoffe oder als Schmelze oder als Gemisch aus Feststoff und Schmelze miteinander in Kontakt gebracht werden.

Der erfindungsgemäße Formkörper umfaßt eine Masse, erhältlich durch Hitzebehandlung, die die Thioharnstoffverbindung und die Kupfer- und/oder Bleiverbindung enthält, oder ein im nahen IR absorbierendes Material, das durch die Hitzebehandlung der Masse erhalten wird. Das Verfahren zur Herstellung dieses Formkörpers erfolgt durch:

(a) Formen eines Gemisches aus den Formkörperrohstoffen, und dem erfindungsgemäßen im nahen IR absorbierenden Material, oder

(b) Auftragen oder Imprägnieren eines dispergierten Schlamms des erfindungsgemäßen Materials mittels Zerstäubungs-, Streich- oder Druckmaschine auf den Förmkörperrohstoff.

Der Formkörper wird hergestellt, indem man aus Zellstoff, Holzschliff, Faser, thermoplastischem Harz, usw. auf bekannte Weise, beispielsweise durch Weben, Blattbildung, Hitzeformierung usw. einen Film, ein Blatt oder eine Stange produziert und gegebenfalls weiter behandelt.

Die Hitzebehandlung zur Erzielung einer Absorptionsfähigkeit im nahen IR ist nicht besonders beschränkt. Alle Hitzebehandlungen, die eine Übertragung von Wärmeenergie für die Erzielung der Absorptionsfähigkeit im nahen IR auf Grund der Reaktion der Thioharnstoffverbindung mit der Kupfer- oder Bleiverbindung mit sich bringen, können erfindungsgemäß verwendet werden. Das Erhitzen kann beispielsweise mit Hilfe einer elektrischen Heizvorrichtung, Induktionsheizvorrichtung, Filmextruders usw., Thermokopfes, Halbleiterlasers; IR-Lampe und dergleichen, erfolgen.

Die Hitzebehandlung wird unter beliebiger Atmosphäre, beispielweise Luftatmosphäre, inerter Gasatmosphäre, usw., üblicherweise unter Luftatmosphäre durchgeführt.

Die Erhitzungstemperatur liegt üblicherweise bei 40 - 400 °C, vorzugsweise bei 50 - 350 °C. Die Erhitzungszeit ist im Bereich von einigen Millisekunden bis zu einigen Zehnminuten.

Eine gleichmäßige Vermischung durch einen Mischer,z.B. Quirl, durch Umrühren und Schwenken ist bevorzugt,

weil dies wegen der zunehmenden Berührungshäufigkeit der Materialien zu einer einheitlichen Wärmeübertragung und großen Reaktionsgeschwindigkeit führt.

Das Mischverhältnis von Thioharnstoffverbindung, Kupfer- und/oder Bleiverbindung ist je nach der Art dieser Verbindungen verschieden, aber 0.01 - 50 Gew.-Teile, vorzugsweise 0,1 - 10 Gew.-Teile der Thioharnstoffverbindung, bezogen auf 1 Gew.-Teil der Kupfer- und/oder Bleiverbindung, werden im allgemeinen verwendet.

Wie oben erwähnt wurde, nimmt das Gemisch aus der Thioharnstoffverbindung der allgemeinen Formel (I) und aus mindestens einer Verbindung aus der Gruppe Kupfer-und Bleihydroxid, Kupferverbindung der allgemeinen Formel (II), Bleiverbindung der allgemeinen Formel (III), Kupfer- und Bleiacetylacetonat, Chlorophyll-Kupfer und -Blei, und Chlorophyllin-Kupfer und -Blei nach Hitzebehandlung nahes IR-Licht gleichmäßig im ganzen Bereich von 700 - 2000 nm auf. Die Ursache für die obige Tatsache ist nicht klar.

Wie aus folgenden Beispielen und Vergleichsbeispielen ersichtlich ist, nimmt weder die Thioharnstoffverbindung noch die obige Kupfer- und/oder Bleiverbindung nach Hitzebehandlung nahes IR-Licht stark und gleichmäßig im ganzen Bereich von 700 - 2000 nm auf . Das Gemisch aus der Thioharnstoffverbindung der allgemeinen Formel (I) und der obigen Kupfer- und/oder Bleiverbindung ohne Hitzebehandlung nimmt ebenfalls kein nahes IR-Licht stark und gleichmäßig auf. Daher vermutet man, daß bei der Hitzebehandlung des Gemisches eine Reaktion zwischen der Thioharnstoffverbindung der allgemeinen Formel (I) und der obigen Kupfer- und/oder Bleiverbindung auftritt, wodurch ein Komplex gebildet wird.

Die Erfindung wird durch folgende Beispiele erläutert. Als Abkürzung für Gewichtsteile wird "Teile" verwendet.

[*Beispiel 1] (Vergleichsbeispiel)

Die Thioharnstoffverbindungen und Kupferverbindungen der Nrn. 1, 3 und 5 der der Tabelle 1 wurden in einer Reibmühle bis zur Teilchengröße von ungefähr 3 μ naß vermahlen.

Lösung A

| | |
|---|---|
| Thioharnstoffverbindung von Nr. 1, 3 oder 5 | 20 Teile |
| 10%-ige wäßrige Lösung von Polyvinylalkohol | 50 Teile |
| Wasser | 30 Teile |
| Gesamt | 100 Teile |

Lösung B

| | |
|---|---|
| Kupferverbindung von Nr. 1, 3 oder 5 | 20 Teile |
| 10%-ige wäßrige Lösung von Polyvinylalkohol | 50 Teile |
| Wasser | 30 Teile |
| Gesamt | 100 Teile |

50 Teile der Lösung A und 50 Teile der Lösung B wurden miteinander vermischt, um eine Beschichtungsmasse herzustellen.

Diese Beschichtungsmasse wurde in einer Beschichtungsmenge von 5 g/$m^2$ auf ein hochklassiges Papier mit einem Gewicht von 60 g/$m^2$ mittels des Meyerbargeräts aufgetragen und getrocknet. Man erhielt ein Aufzeichnungsblatt. Alle erhaltenen Aufzeichnungsblätter sind weiß bis blaßblau, und färben sich blaßgrünlich bei der Berührung mit einer Metallplatte von einer Oberflächentemperatur von 150°C während 5 Sekunden. Bei jedem gefärbten Teil sind die Absorptionswerte des nahen IR-Lichtes bei 800, 900, 1000, 1500 und 2000 nm Wellenlänge durchschnittlich mehr als 80%, und sie sind daher hoch.

Der wärmeempfindliche Druck erfolgte durch einen wärmeempfindlichen Drucker für Strichcode-Zettel (BW-100T, hergestellt von Mekano System Co., Ltd.). In jedem Fall wurde ein blaßgrünes Strichcode-Muster auf jedes der Blätter gedruckt.

Dieses Muster ist lesbar mittels eines Lesers für Strichcode-Zettel (MS-Ba-Dec 230, hergestellt von Mekano System Co., Ltd.), bei dem das Licht eines Halbleiterlasers als Leselichtquelle verwendet wurde.

[Beispiel 2]

Auf Basis der Kombinationen Nr. 1 - 23 in der Tabelle 1 wurden 5 Teile einer Thioharnstoffverbindung und 5 Teile einer Kupferverbindung in einem Porzellantiegel vermischt. 10 Teile des Gemisches wurden während 15 Sekunden bei 150°C in einem elektrischen Ofen hitzebehandelt.

Das erhaltene, blaßfarbige Pulverprodukt wurde in einer bestimmten Dicke auf einem hochklassigen Papier fixiert.

Der Reflexionsgrad der Oberfläche wurde mit dem Spektrophotometer (UVID EC-590, hergestellt von Japan Spectroscopic Co., Ltd.) in bezug auf das. Reflexionsspektrum des nahen IR-Bereiches im Wellenlängenbereich von 800 - 2500 nm gemessen.

Die Absorptionsfähigkeit im nahen IR wird als Durchschnittswert der Absorptionswerte dargestellt, wobei dieser Absorptionswert der Unterschied zwischen 100% und dem Reflexionsgrad bei der Wellenlänge von 800, 900, 1000, 1500 und 2000 nm ist. Dabei zeigt ◎ einen Durchschnittswert von wenigstens 80%, ○ einen Durchschnittswert von wenigstens 60%, Δ einen Durchschnittwert von wenigstens 30%, und X einen Durchschnittswert von weniger als 30%.

Das Material mit einem Durchschnittswert von wenigstens 30% bedeutet ein erfindungsgemäßes im nahen IR absorbierendes Material. Die nahen IR-Absorptionsfähigkeiten der erfindungsgemäßen Materialien in Nrn. 1 - 23 der Tabelle 1 zeigen einen Durchschnittswert von wenigstens 60%.

[Vergleichsbeispiel 1]

Jede der Thioharnstoffverbindungen oder jede der Kupferverbindungen in der Tabelle 2 wurde unter den gleichen Bedingungen wie im Beispiel 2 hitzebehandelt, und auf die Herstellung des Produktes angewandt. Das nahe IR-Reflexionsspektrum eines erhaltenen Produktes wurde gemessen, und die nahe IR-Absorptionsfähigkeit wurde in gleicher Weise wie im Beispiel 2 bewertet. Alle Absorptionsfähigkeiten im nahen IR sind weniger als 30%, wie es aus der Tabelle 2 ersichtlich ist.

Die Änderung der Absorptionsfähigkeit im nahen IR bei der getrennten Hitzebehandlung der einzelnen Komponenten, der Mischung ohne Hitzebehandlung, und der Mischung aus einer Thioharnstoffverbindung und einer Kupferverbindung nach Hitzebehandlung ist in Abbildung 1 erläutert. In der Abbildung 1 werden als Thioharnstoffverbindung 1,3-Diphenylthioharnstoff und als Kupferverbindung Kupfer-p-chlorbenzoat verwendet.

Nr. 1 und Nr. 4 des Vergleichsbeispiels 1 (getrennte Hitzebehandlung) Nr. 1 des Beispiels 1 Mischung ohne Hitzebehandlung) und Nr. 1 des Beispiels 2 (Hitzebehandlung der Mischung) werden in bezug auf die nahen IR-Reflexionsspektra im Bereich von 800 - 2000 nm verglichen.

Aus der Abbildung 1 ist ersichtlich, daß die Absorptionsfähigkeit des erhitzten Gemisches aus 1,3-Diphenylthioharnstoff und Kupfer-p-chlorbenzoat (bei Nr. 1 des Beispiels 2) im nahen IR erheblich höher ist als diejenige der getrennt erhitzten Komponenten oder als diejenige der Mischung ohne Hitzebehandlung; das heißt, daß die nahe IR-Absorptionsfähigkeit von Nr. 1 des Beispiels 2 mehr als 90% im ganzen Meßewellenlängenbereich ist.

[Beispiel 3]

Mit jeder der Thioharnstoffverbindungen und Kupferverbindungen der Nrn. 24 - 32 der Tabelle 3 wurden folgende Zusammensetzungen zubereitet:

Lösung A

| | |
|---|---|
| Thioharnstoffverbindung | 50 Teile |
| 10%-ige wäßrige Lösung von Polyvinylalkohol | 25 Teile |
| Wasser | 125 Teile |

Lösung B

| | |
|---|---|
| Kupferverbindung | 50 Teile |
| 10%-ige wäßrige Lösung von Polyvinylalkohol | 25 Teile |
| Wasser | 125 Teile |

Die Lösungen der obigen Zusammensetzungen wurden in einer Reibmühle einzeln bis zur Teilchengröße von 1 Mikron vermahlen. Die Lösungen wurden in dem in der Tabelle 3 angegebenen Verhältnis miteinander vermischt, um eine Beschichtungsmasse zu erhalten. Die erhaltene Beschichtungsmasse wurde in einer Beschichtungsmenge von 3,0 g/m$^2$ (Feststoffgehalt) auf ein hochklassiges Papier von 50 g/m$^2$ aufgetragen und getrocknet, um ein Aufzeichnungsblatt zu erhalten.

Dieses Aufzeichnungsblatt wurde 5 Sekunden unter einem Druck von 10 g/m2 gegen eine auf 150°C erhitzte Platte gepreßt (hitzebehandelt). Man erhielt ein im nahen IR absorbierendes Aufzeichnungsblatt.

Die Absorptionsfähigkeit des erhaltenen Aufzeichnungsblattes wurde in der gleichen Weise wie im Beispiel 2 gemessen, und die Hintergrundfarbe der Beschichtungsoberfläche und die Beständigkeit der IR-Absorptionsfähigkeit gegenüber Hitze, Feuchtigkeit, und Licht wurde wie folgt bestimmt, und die Ergebnisse sind in der Tabelle 3 zusammengefaßt.

[Anmerkungen]

Hintergrundfarbe

Der Reflexionsgrad der Beschichtungsoberfläche nach der Hitzebehandlung wird mit einem Macbeth-Dichtemesser (RD-914, Verwendung des Amber-Filters) gemessen.

Hitzebeständigkeit

Ein Blatt wird 24 Stunden im Ofen bei 60°C belassen. Dann wird der IR-Reflexionsgrad des Blattes mit einem Spectrophotometer (bei einer Wellenlänge von 1000 nm) gemessen.

Die Beständigkeit gegenüber Hitze wird als Restprozentsatz der nahen IR-Absorptionsfähigkeit durch folgende Formel bewertet.

$$\text{Restprozent} = \frac{100 - \text{Reflexionsgrad nach Hitzebehandlung}}{100 - \text{Reflexionsgrad vor Hitzebehandlung}} \times 100\ (\%)$$

Beständigkeit gegenüber Luftfeuchtigkeit

Ein Blatt wird bei 40°C und 90% relativer Luftfeuchtigkeit stehengelassen. Nach 24 Stunden wird. der IR-Reflexionsgrad des Blattes mit einem Spektrophotometer (bei einer Wellenlänge von 1000 nm) gemessen. Die Beständigkeit gegenüber Luftfeuchtigkeit wird als Restprozentsatz der nahen IR-Absorptionsfähigkeit durch folgende Formel bewertet.

$$\text{Restprozent} = \frac{100 - \text{Reflexionsgrad nach feuchter Lagerung}}{100 - \text{Reflexionsgrad vor feuchter Lagerung}} \times 100\ (\%)$$

Lichtbeständigkeit

Ein Blatt wird 6 Stunden mit dem Licht eines Fade-O-Meters bestrahlt. Der IR-Reflexionsgrad des Blattes wird mit einem Spektrophotometer (bei einer Wellenlänge von 1000 nm) gemessen. Die Beständigkeit gegenüber Licht wird als Restprozentsatz der nahen IR-Absorptionsfähigkeit durch folgende Formel bewertet.

$$\text{Restprozent} = \frac{100 - \text{Reflexionsgrad nach Lichtbestrahlung}}{100 - \text{Reflexionsgrad vor Lichtbestrahlung}} \times 100\ (\%)$$

[Vergleichsbeispiel 2]

Die die Thioharnstoffverbindung enthaltende Dispersion A oder die die Kupferverbindung enthaltende Dispersion B, die im Beispiel 3 verwendet wurden, wurde auf die gleiche Weise wie im Beispiel 3 getrennt aufgetragen, getrocknet und dann hitzebehandelt, um ein Produkt zu herzustellen. Die nahe IR-Absorptionsfähigkeit des Produktes wurde gemessen.

Bei den Blättern, auf die ein- Gemisch aus der Thioharnstoffverbindung und der Kupferverbindung aufgetragen und die getrocknet wurden, führt eine Hitzebehandlung zu einem Blatt mit einer hohen Absorptionsfähigkeit im nahen IR,wie aus Tabelle 3 ersichtlich ist. Diese hohe IR-Absorptionsfähigkeit wird unter der Einwirkung von Hitze, Feuchtigkeit und Licht fast nicht erniedrigt und sie ist erstaunlich stabil gegenüber der Handhabung und der Änderung der Umweltsbedingungen. Die Oberfläche dieses Blattes färbt sich etwas ins Graue, wodurch das Blatt aber keine auffallende Farbveränderung erfährt. Das Blatt, auf das entweder die Thioharnstoffverbindung oder die Kupferverbindung aufgetragen und das getrocknet wurde, weist bei der Hitzebehandlung keine nahe IR-Absorptionsfähigkeit auf, und es wurde daher hinsichtlich der Stabilität der IR-Absorptionsfähigkeit während der Lagerung nicht geprüft.

Tabelle 1

| | Thioharnstoffverbindung | Kupferverbindung | Mischverhältnis | Nahe IR-Absorptionsfähigkeit | Hitzebehandlung |
|---|---|---|---|---|---|
| Nr. 1 | 1,3-Diphenylthioharnstoff | Kupfer-p-chlorbenzoat | 1:1 | ◎ | Hitzebehandlung |
| Nr. 2 | 1,3-Dilaurylthioharnstoff | Kupfer-p-chlorbenzoat | 1:1 | ◎ | Hitzebehandlung |
| Nr. 3 | 1,3-Diäthylthioharnstoff | Kupfer-p-chlorbenzoat | 1:1 | ◎ | Hitzebehandlung |
| Nr. 4 | 1,3-Dimethylthioharnstoff | Kupfer-p-chlorbenzoat | 1:1 | ◎ | Hitzebehandlung |
| Nr. 5 | 1,3-Di-m-chlorphenylthioharnstoff | Kupfer-p-chlorbenzoat | 1:1 | ◎ | Hitzebehandlung |
| Nr. 6 | 1,3-Diphenylthioharnstoff | Kupferstearat | 1:1 | ◎ | Hitzebehandlung |
| Nr. 7 | 1,3-Diphenylthioharnstoff | Kupferbehenat | 1:1 | ◎ | Hitzebehandlung |
| Nr. 8 | 1,3-Diphenylthioharnstoff | Kupfer-p-nitrobenzoat | 1:1 | ◎ | Hitzebehandlung |
| Nr. 9 | 1,3-Diphenylthioharnstoff + 1,3-Dichlorthioharnstoff | Kupfer-m-chlorbenzoat | (0.5:0.5) : 1 | ◎ | Hitzebehandlung |
| Nr. 10 | 1,3-Diphenylthioharnstoff | Kupfer-p-brombenzoat | 1:1 | ◎ | Hitzebehandlung |
| Nr. 11 | 1,3-Diphenylthioharnstoff | Kupferbenzoat | 1:1 | ○ | Hitzebehandlung |
| Nr. 12 | 1,3-Diphenylthioharnstoff | Kupfer-o-benzoylbenzoat | 1:1 | ○ | Hitzebehandlung |
| Nr. 13 | 1,3-Diphenylthioharnstoff | Chlorophyll-Kupfer | 1:1 | ○ | Hitzebehandlung |
| Nr. 14 | 1,3-Diphenylthioharnstoff | Kupferglukonat | 1:1 | ○ | Hitzebehandlung |
| Nr. 15 | 1,3-Diphenylthioharnstoff | Kupfer-4-cyclohexyllaktat | 1:1 | ○ | Hitzebehandlung |
| Nr. 16 | 1,3-Diphenylthioharnstoff | Kupfer-n-dodecylbenzolsulfonat | 1:1 | ○ | Hitzebehandlung |
| Nr. 17 | 1,3-Diphenylthioharnstoff | Kupfernaphthalinsulfonat | 1:1 | ○ | Hitzebehandlung |
| Nr. 18 | 1,3-Diphenylthioharnstoff | Kupfer-α-naphthylphosphat | 1:1 | ○ | Hitzebehandlung |
| Nr. 19 | 1,3-Diphenylthioharnstoff | Kupferstearat + Kupfer-p-chlorbenzoat | 1 : (0.5:0.5) | ○ | Hitzebehandlung |
| Nr. 20 | 1,3-Diphenylthioharnstoff | Kupferstearylphosphat | 1:1 | ○ | Hitzebehandlung |
| Nr. 21 | 1,3-Diphenylthioharnstoff | Kupferacetat | 1:1 | ○ | Hitzebehandlung |
| Nr. 22 | 1,3-Diphenylthioharnstoff | Kupfersuccinat | 1:1 | ○ | Hitzebehandlung |
| Nr. 23 | 1,3-Diphenylthioharnstoff | Kupferglutarat | 1:1 | ○ | Hitzebehandlung |

Tabelle 2

| | Thioharnstoffverbindung | Kupferverbindung | Mischverhältnis | Nahe IR-Absorptionsfähigkeit | Hitzebehandlung |
|---|---|---|---|---|---|
| Nr. 1 | 1,3-Diphenylthioharnstoff | - | 1:0 | X | Hitzebehandlung |
| Nr. 2 | 1,3-Dilaurylthioharnstoff | - | 1:0 | X | Hitzebehandlung |
| Nr. 3 | 1,3-Di-m-chlorphenylthioharnstoff | - | 1:0 | X | Hitzebehandlung |
| Nr. 4 | - | Kupfer-p-chlorbenzoat | 0:1 | X | Hitzebehandlung |
| Nr. 5 | - | Kupferbehenat | 0:1 | X | Hitzebehandlung |
| Nr. 6 | - | Kupferstearat | 0:1 | X | Hitzebehandlung |

Tabelle 3

| | Thioharnstoffverbindung | Kupferverbindung | Mischverhältnis | Hintergrundfarbe | Nahe IR-Absorptionsfähigkeit | Beständigkeit gegenüber | | |
|---|---|---|---|---|---|---|---|---|
| | | | | | | Hitze | Luftfeuchtigkeit | Licht |
| Nr. 24 | 1,3-Diphenylthioharnstoff | Kupfer-p-chlorbenzoat | 1:1 | 0.26 | O | 98 | 95 | 97 |
| Nr. 25 | 1,3-Diphenylthioharnstoff | Kupfer-p-chlorbenzoat | 0.5:1 | 0.27 | O | 97 | 94 | 96 |
| Nr. 26 | 1,3-Diphenylthioharnstoff | Kupfer-p-chlorbenzoat | 1:0.5 | 0.25 | O | 96 | 93 | 95 |
| Nr. 27 | 1,3-Di-m-chlorphenylthioharnstoff | Kupfer-p-chlorbenzoat | 1:1 | 0.24 | O | 98 | 96 | 98 |
| Nr. 28 | 1,3-Di-m-chlorphenylthioharnstoff | Kupfer-p-chlorbenzoat | 0.5:1 | 0.25 | O | 97 | 96 | 97 |
| Nr. 29 | 1,3-Di-m-chlorphenylthioharnstoff | Kupfer-p-chlorbenzoat | 1:0.5 | 0.22 | O | 96 | 95 | 95 |
| Nr. 30 | 1,3-Dilaurylthioharnstoff | Kupfer-p-chlorbenzoat | 1:1 | 0.27 | O | 95 | 94 | 96 |
| Nr. 31 | 1,3-Dilaurylthioharnstoff | Kupfer-p-chlorbenzoat | 0.5:1 | 0.28 | O | 94 | 94 | 93 |
| Nr. 32 | 1,3-Dilaurylthioharnstoff | Kupfer-p-chlorbenzoat | 1:0.5 | 0.26 | O | 95 | 94 | 92 |
| Nr. 8 | 1,3-Diphenylthioharnstoff | - | 1:0 | 0.08 | X | | | |
| Nr. 9 | - | Kupfer-p-chlorbenzoat | 0:1 | 0.29 | X | | | |
| Nr. 10 | 1,3-Di-m-chlorphenylthioharnstoff | - | 1:0 | 0.08 | X | | | |
| Nr. 11 | 1,3-Dilaurylthioharnstoff | - | 1:0 | 0.08 | X | | | |

[*Beispiel 4] (Vergleichsbeispiel)

Jede der Thioharnstoffverbindungen und der Bleiverbindungen, die in Nrn. 1, 3 und 5 der Tabelle 4 beschrieben wurden, wurde in einer Reibmühle bis zur Teilchengröße von ungefähr 3 µ naß vermahlen.

Lösung A

| | |
|---|---|
| Thioharnstoffverbindung von Nr. 1, 3 oder 5 | 20 Teile |
| 10%-ige wäßrige Lösung von Polyvinylalkohol | 50 Teile |
| Wasser | 30 Teile |
| Gesamt | 100 Teile |

Lösung B

| | |
|---|---|
| Bleiverbindung von Nr. 1, 3 oder 5 | 20 Teile |
| 10%-ige wäßrige Lösung von Polyvinylalkohol | 50 Teile |
| Wasser | 30 Teile |
| Gesamt | 100 Teile |

50 Teile der Lösung A und 50 Teile der Lösung B wurden miteinander vermischt, um eine Beschichtungsmasse herzustellen.

Diese Beschichtungsmasse wurde in einer Beschichtungsmenge von 5 g/$m^2$ auf ein hochklassiges Papier mit einem Gewicht von 60 g/$m^2$ mittels des Meyerbargeräts aufgetragen und getrocknet. Man erhielt ein Aufzeichnungsblatt. Alle erhaltenen Aufzeichnungsblätter sind weiß bis blaßblau und färben sich blaßgrünlich bei der Berührung mit einer Metallplatte von einer Oberflächentemperatur von 150°c während 5 Sekunden. Bei jedem gefärbten Teil sind die Absorptionswerte des nahen IR-Lichtes bei 800, 900, 1000, 1500 und 2000 nm Wellenlänge durchschnittlich mehr als 80%, und sie sind daher hoch.

Der wärmeempfindliche Druck erfolgte durch einen wärmeempfindlichen Drucker für Strichcode-Zettel (BW-100T, hergestellt von Mekano System Co., Ltd.). In jedem Fall wurde ein blaßgrünes Strichcode-Muster auf jedes der Blätter gedruckt.

Dieser Muster ist lesbar mittels eines Lesers für Strichcode-Zittel (MS-Ba-Dec 230, hergestellt von Mekano System Co., Ltd.), bei dem das Licht eines Halbleiterlasers als Leselichtquelle verwendet wurde.

[Beispiel 5]

Auf Basis der Kombinationen Nr. 1 - 23 in der Tabelle 4 wurden 5 Teile einer Thioharnstoffverbindung und 5 Teile einer Bleiverbindung in einem Porzellantiegel vermischt. 10 Teile des Gemisches wurden während 15 Minuten bei 150°C in einem elektrischen Ofen hitzebehandelt.

Das erhaltene, blaßfarbige Pulverprodukt wurde in einer bestimmten Dicke auf einem hochklassigen Papier fixiert.

Der Reflexionsgrad der Oberfläche wurde in der gleichen Weise wie im Beispiel 2 gemessen.

Die nahe IR-Absorptionsfähigkeit wird in der gleichen Weise wie im Beispiel 2 dargestellt. Die nahen. IR-Absorptionsfähigkeiten der erfindungsgemäßen Materialien in Nrn. 1 - 23 der Tabelle 4 zeigen einen Durchschnittswert von wenigstens 60%.

[Vergleichsbeispiel 3]

Jede der Thioharnstoffverbindungen oder jede der Bleiverbindungen in der Tabelle 5 wurde unter den gleichen Bedingungen wie im Beispiel 5 hitzebehandelt, und auf die Herstellung des Produktes angewandt. Das nahe IR-Reflexionsspektrum eines erhaltenen Produktes wurde gemessen, und die nahe IR-Absorptionsfähigkeit wurde in gleicher Weise wie im Beispiel 5 bewertet. Alle Absorptionsfähigkeiten im nahen IR sind weniger als 30%, wie es aus der Tabelle 5 ersichtlich ist.

Die Änderung der Absorptionsfähigkeit im nahen IR bei der getrennten Hitzebehandlung der einzelnen Komponenten, der Mischung ohne Hitzebehandlung, und der Mischung aus einer Thioharnstoffverbindung und einer Bleiverbindung nach Hitzebehandlung ist in Abbildung 2 erläutert. In der Abbildung 2 werden als Thioharnstoffverbindung 1,3-Diphenylthioharnstoff und als Bleiverbindung Blei-p-chlorbenzoat verwendet. Nr. 1 und Nr. 4 des Vergleichsbeispiels 3 (getrennte Hitzebehandlung) Nr. 1 des Beispiels 4 (Mischung ohne Hitzebehandlung) und Nr. 1 des Beispiels 5 (Hitzebehandlung der Mischung)werden in bezug auf die nahen IR-Reflexionsspektra im Bereich von 800 - 2000 nm verglichen.

Aus der Abbildung 2 ist ersichtlich, daß die Absorptionsfähigkeit von Nr. 1 des Beispiels 5 im nahen IR beim erhitzten Gemisch aus 1,3-Diphenylthioharnstoff und Blei-p-chlorbenzoat erheblich höher ist als diejenige der getrennt erhitzten Komponenten oder als diejenige der Mischung ohne Hitzebehandlung; das heißt, daß die nahe IR-Absorptionsfähigkeit von Nr. 1 des Beispiels 5 mehr als 90% im ganzen Meßwellenlängenbereich ist.

[Beispiel 6]

Mit jeder der Thioharnstoffverbindungen und Bleiverbindungen der Nrn. 24 - 32 der Tabelle 6 wurden folgende Zusammensetzungen zubereitet.

Lösung A

| | |
|---|---|
| Thioharnstoffverbindung | 50 Teile |
| 10%-ige wäßrige Lösung von Polyvinylalkohol | 25 Teile |
| Wasser | 125 Teile |

Lösung B

| | |
|---|---|
| Bleiverbindung | 50 Teile |
| 10%-ige wäßrige Lösung von Polyvinylalkohol | 25 Teile |
| Wasser | 125 Teile |

Die Lösungen der obigen Zusammensetzungen wurden in einer Reibmühle einzeln bis zur Teilchengröße von 1 Mikron vermahlen. Die Lösungen wurden in dem in Tabelle 6 angegebenen Verhältnis miteinander vermischt, um eine Beschichtungsmasse zu erhalten. Die erhaltene Beschichtungsmasse wurde in einer Beschichtungsmenge von 3,0 $g/m^2$ (Feststoffgehalt) auf ein hochklassiges Papier von 50 $g/m^2$ aufgetragen und getrocknet, um ein Aufzeichnungsblatt zu erhalten.

Dieses Aufzeichnungsblatt wurde 5 Sekunden unter einem Druck von 10 g/m2 gegen eine auf 150°C erhitzte Platte gepreßt (hitzebehandelt). Man erhielt ein im nahen IR absorbierendes Aufzeichnungsblatt.

Die Absorptionsfähigkeit des erhaltenen Aufzeichnungsblattes, die Hintergrundfarbe der Beschichtungsoberfläche und die Beständigkeit der IR-Absorptionsfähigkeit gegenüber Wärme, Feuchtigkeit, und Licht wurden in der gleichen Weise wie im Beispiel 3 bestimmt, und die Ergebnisse sind in der Tabelle 6 zusammengefaßt.

[Vergleichsbeispiel 4]

Die die Thioharnstoffverbindung enthaltende Dispersion A oder die die Bleiverbindung enthaltende Dispersion B, die im Beispiel 6 verwendet wurden, wurde auf die gleiche Weise wie im Beispiel 6 getrennt aufgetragen, getrocknet und dann hitzebehandelt, um ein Produkt zu herzustellen. Die nahe IR-Absorptionsfähigkeit des Produktes wurde gemessen.

Bei den Blättern, auf die ein Gemisch aus der Thioharnstoffverbindung und der Bleiverbindung aufgetragen und die getrocknet wurden, führt eine Hitzebehandlung zu einem Blatt mit einer hohen Absorptionsfähiskeit im nahen IR, wie aus Tabelle 6 ersichtlich ist. Diese hohe IRAbsorptionsfähigkeit wird unter der Einwirkung von Hitze, Feuchtigkeit und Licht fast nicht erniedrigt und sie ist erstaunlich stabil gegenüber der Handhabung und der Änderung der Umweltsbedingungen. Die Oberfläche dieses Blattes färbt sich etwas ins Graue, wodurch das Blatt aber keine auffallende Farbveränderung erfährt. Das Blatt, auf das.entweder die Thioharnstoffverbindung oder die Bleiverbindung aufgetragen und das getrocknet wurde, weist bei der Hitzebehandlung keine nahe IR-Absorptionsfähigkeit auf, und es wurde daher hinsichtlich der Stabilität der IR-Absorptionsfähigkeit während der Lagerung nicht geprüft.

Tabelle 4

| | Thioharnstoffverbindung | Bleiverbindung | Mischverhältnis | Nahe IR-Absorptionsfähigkeit | Hitzebehandlung |
|---|---|---|---|---|---|
| Nr. 1 | 1,3-Diphenylthioharnstoff | Blei-p-chlorbenzoat | 1:1 | ◎ | Hitzebehandlung |
| Nr. 2 | 1,3-Dilaurylthioharnstoff | Blei-p-chlorbenzoat | 1:1 | ◎ | Hitzebehandlung |
| Nr. 3 | 1,3-Diäthylthioharnstoff | Blei-p-chlorbenzoat | 1:1 | ◎ | Hitzebehandlung |
| Nr. 4 | 1,3-Dimethylthioharnstoff | Blei-p-chlorbenzoat | 1:1 | ◎ | Hitzebehandlung |
| Nr. 5 | 1,3-Di-m-chlorphenylthioharnstoff | Blei-p-chlorbenzoat | 1:1 | ◎ | Hitzebehandlung |
| Nr. 6 | 1,3-Diphenylthioharnstoff | Bleistearat | 1:1 | ◎ | Hitzebehandlung |
| Nr. 7 | 1,3-Diphenylthioharnstoff | Bleibehenat | 1:1 | ◎ | Hitzebehandlung |
| Nr. 8 | 1,3-Diphenylthioharnstoff | Blei-p-nitrobenzoat | 1:1 | ◎ | Hitzebehandlung |
| Nr. 9 | 1,3-Diphenylthioharnstoff + 1,3-Dichlorthioharnstoff | Blei-m-chlorbenzoat | (0.5:0.5) : 1 | ◎ | Hitzebehandlung |
| Nr. 10 | 1,3-Diphenylthioharnstoff | Blei-p-brombenzoat | 1:1 | ◎ | Hitzebehandlung |
| Nr. 11 | 1,3-Diphenylthioharnstoff | Bleibenzoat | 1:1 | ○ | Hitzebehandlung |
| Nr. 12 | 1,3-Diphenylthioharnstoff | Blei-o-benzoylbenzoat | 1:1 | ○ | Hitzebehandlung |
| Nr. 13 | 1,3-Diphenylthioharnstoff | Chlorophyll-Blei | 1:1 | ○ | Hitzebehandlung |
| Nr. 14 | 1,3-Diphenylthioharnstoff | Bleiglukonat | 1:1 | ○ | Hitzebehandlung |
| Nr. 15 | 1,3-Diphenylthioharnstoff | Blei-4-cyclohexyllaktat | 1:1 | ○ | Hitzebehandlung |
| Nr. 16 | 1,3-Diphenylthioharnstoff | Blei-n-dodecylbenzolsulfonat | 1:1 | ○ | Hitzebehandlung |
| Nr. 17 | 1,3-Diphenylthioharnstoff | Bleinaphthalinsulfonat | 1:1 | ○ | Hitzebehandlung |
| Nr. 18 | 1,3-Diphenylthioharnstoff | Blei-α-naphthylphosphat | 1:1 | ○ | Hitzebehandlung |
| Nr. 19 | 1,3-Diphenylthioharnstoff | Bleistearat + Blei-p-chlorbenzoat | 1 : (0.5:0.5) | ○ | Hitzebehandlung |
| Nr. 20 | 1,3-Diphenylthioharnstoff | Bleistearylphosphat | 1:1 | ○ | Hitzebehandlung |
| Nr. 21 | 1,3-Diphenylthioharnstoff | Bleiacetat | 1:1 | ○ | Hitzebehandlung |
| Nr. 22 | 1,3-Diphenylthioharnstoff | Bleisuccinat | 1:1 | ○ | Hitzebehandlung |
| Nr. 23 | 1,3-Diphenylthioharnstoff | Bleiglutarat | 1:1 | ○ | Hitzebehandlung |

Tabelle 5

| | Thioharnstoffverbindung | Bleiverbindung | Mischverhältnis | Nahe IR-Absorptionsfähigkeit | Hitzebehandlung |
|---|---|---|---|---|---|
| Nr. 1 | 1,3-Diphenylthioharnstoff | - | 1:0 | X | Hitzebehandlung |
| Nr. 2 | 1,3-Dilaurylthioharnstoff | - | 1:0 | X | Hitzebehandlung |
| Nr. 3 | 1,3-Di-m-chlorphenylthioharnstoff | - | 1:0 | X | Hitzebehandlung |
| Nr. 4 | - | Blei-p-chlorbenzoat | 0:1 | X | Hitzebehandlung |
| Nr. 5 | - | Bleibehenat | 0:1 | X | Hitzebehandlung |
| Nr. 6 | - | Bleistearat | 0:1 | X | Hitzebehandlung |

Tabelle 6

| | Thioharnstoffverbindung | Bleiverbindung | Mischverhältnis | Hintergrundfarbe | Nahe IR-Absorptionsfähigkeit | Beständigkeit gegenüber | | |
|---|---|---|---|---|---|---|---|---|
| | | | | | | Hitze | Luftfeuchtigkeit | Licht |
| Nr. 24 | 1,3-Diphenylthioharnstoff | Blei-p-chlorbenzoat | 1:1 | 0.27 | O | 99 | 96 | 98 |
| Nr. 25 | 1,3-Diphenylthioharnstoff | Blei-p-chlorbenzoat | 0.5:1 | 0.28 | O | 98 | 95 | 96 |
| Nr. 26 | 1,3-Diphenylthioharnstoff | Blei-p-chlorbenzoat | 1:0.5 | 0.27 | O | 97 | 93 | 96 |
| Nr. 27 | 1,3-Di-m-chlorphenylthioharnstoff | Blei-p-chlorbenzoat | 1:1 | 0.25 | O | 98 | 95 | 98 |
| Nr. 28 | 1,3-Di-m-chlorphenylthioharnstoff | Blei-p-chlorbenzoat | 0.5:1 | 0.24 | O | 96 | 96 | 97 |
| Nr. 29 | 1,3-Di-m-chlorphenylthioharnstoff | Blei-p-chlorbenzoat | 1:0.5 | 0.23 | O | 97 | 94 | 95 |
| Nr. 30 | 1,3-Dilaurylthioharnstoff | Blei-p-chlorbenzoat | 1:1 | 0.28 | O | 95 | 94 | 94 |
| Nr. 31 | 1,3-Dilaurylthioharnstoff | Blei-p-chlorbenzoat | 0.5:1 | 0.29 | O | 94 | 93 | 93 |
| Nr. 32 | 1,3-Dilaurylthioharnstoff | Blei-p-chlorbenzoat | 1:0.5 | 0.28 | O | 94 | 94 | 91 |
| Nr. 8 | 1,3-Diphenylthioharnstoff | | 1:0 | 0.08 | X | | | |
| Nr. 9 | - | Blei-p-chlorbenzoat | 0:1 | 0.30 | X | | | |
| Nr. 10 | 1,3-Di-m-chlorphenylthioharnstoff | - | 1:0 | 0.08 | X | | | |
| Nr. 11 | 1,3-Dilaurylthioharnstoff | - | 1:0 | 0.07 | X | | | |

Die nach Hitzebehandlung im nahen IR absorbierende Masse und das diese Masse enthaltende Blatt sind fast farblos, wobei der erhitzte Teil sofort eine nahe IR-Absorptionsfähigkeit besitzt. Die Hitzebehandlung der Masse, oder des diese hitzebehandelte Masse enthaltenden Blattes führt zur starken Absorptionsfähigkeit im ganz nahen IR-Bereich von 800 - 2000 nm. Wegen der obigen nahen IR-Absorptionsfähigkeit können die erfindungsgemäßen Produkte als optische Materialien wie als Thermodetektor; Filter für Licht im nahen IR-Bereich, Aufzeichnungsmaterial; Material zur

Abweisung bzw. Isolierung von Wärmestrahlen; Wärmesammler; Sensor für IR-Detektoren und dergleichen verwendet werden.

Die Masse oder das durch ihre Hitzebehandlung erhaltene Material wird trotz des Vorhandenseins von Metall nur gering verfärbt. Daher besitzen die diese Masse oder dieses Material enthaltenden Formkörper (Film, Blatt usw.) ein überlegenes Aussehen.

Die Absorptionsfähigkeit der nach Hitzebehandlung im nahen IR absorbierenden Masse, des erfindungsgemäßen im nahen IR absorbierenden Materials und des diese Masse oder dieses Material enthaltenden Formkörpers ist stabil genenüber der Veränderung der Umweltbedingungen im Laufe der Zeit, d.h. sie verschlechtert sich nicht.

Weiter kann die nach Hitzebehandlung im nahen IR-absorbierende Masse nur durch die Mischung der Komponenten hergestellt werden, das erfindungsgemäße im nahen IR absorbierende Material nur durch Erhitzen dieser Mischung. Die Herstellung des Formkörpers, das das erfindungsgemäße Material enthält, benötigt kein neues Mittel. Daher ist der Gegenstand dieser Erfindung für die industrielle Produktion geeignet.

## Patentansprüche

1. Verwendung einer Masse, die mindestens eine Thioharnstoffverbindung der allgemeinen Formel (I) und mindestens eine Kupfer- und/oder Bleiverbindung enthält:

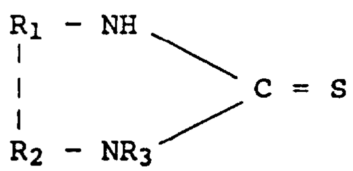

(I)

(worin $R_1$, $R_2$ und $R_3$ jeweils ein Wasserstoffatom, eine Alkyl-, Cycloalkyl-, Aryl-, Aralkyl-, Alkenylgruppe, oder einen einwertigen 5- oder 6-gliedrigen Ring bedeuten, wobei jede Gruppe durch mindestens einen Substituenten substituiert sein kann, oder $R_1$ und $R_2$ oder $R_2$ und $R_3$ gemeinsam einen Ring bilden können), zur Herstellung eines nach Hitzebehandlung im nahen IR absorbierenden Materials.

2. Verwendung nach Anspruch 1, dadurch gekennzeichnet, daß die Kupferverbindung eine Kupferverbindung der Formel (II)

$$(R - X)_n \, Cu \qquad (II)$$

ist,
worin R ein Wasserstoffatom, eine Alkyl-, Cycloalkyl-Aryl-, Aralkyigruppe oder einen einwertigen 5- oder 6gliedrigen Ring bedeutet, wobei jede Gruppe durch mindestens einen Substituenten substituiert sein kann, X für -COO, $-SO_4$, $-SO_3$, $-PO_4$, oder -O steht und n eine ganze Zahl von 1 bis 4 ist.

3. Verwendung nach Anspruch 1,
**dadurch gekennzeichnet**, daß die Kupferverbindung Kupferacetylacetonat ist.

4. Verwendung nach Anspruch 1, dadurch gekennzeichnet, daß die Kupferverbindung Chlorophyll-Kupfer oder Chlorophyllin-Kupfer oder Kupferhydroxid ist.

5. Verwendung nach Anspruch 1, dadurch gekennzeichnet, daß die Bleiverbindung eine Bleiverbindung der Formel (III)

$$(R - X)_n \, Pb \qquad (III)$$

ist,
worin R ein Wasserstoffatom, eine Alkyl-, Cycloalkyl-Aryl-, Aralkylgruppe, oder ein heterocyclischer Rest ist, (wobei jede Gruppe oder der Rest durch mindestens einen Substituenten substituiert sein kann), X für -COO, $-SO_4$, $-SO_3$, $-PO_4$, oder -O steht und n eine ganze Zahl von 1 bis 4 ist.

6. Verwendung nach Anspruch 1, dadurch gekennzeichnet, daß die Bleiverbindung Bleiacetylacetonat ist.

7. Verwendung nach Anspruch 1, dadurch gekennzeichnet, daß die Bleiverbindung Chlorophyll-Blei oder Chlorophyllin-Blei oder Bleihydroxid ist.

8. Im nahen IR absorbierendes Material erhältlich durch Hitzebehandlung der in einem der Ansprüche 1 bis 7 definierten Masse.

9. Im nahen IR absorbierender Formkörper, dadurch gekennzeichnet, daß er das im nahen IR absorbierende Material nach Anspruch 8 umfaßt.

## Claims

1. The use of a composition which contains at least one thiourea compound of the general Formula (I) and at least one copper and/or lead compound:

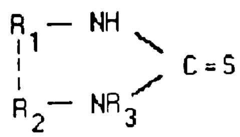

(I)

(wherein $R_1$, $R_2$ and $R_3$ represents in each case a hydrogen atom, an alkyl-, cycloalkyl-, aryl-, aralkyl-, alkenyl group or a monovalent 5 or 6 membered ring, wherein each group can be substituted by at least one substituent, or $R_1$ and $R_2$ or $R_2$ and $R_3$ together can form a ring) for the manufacture of a material absorbing in the near IR after heat treatment.

2. Use according to Claim 1, characterised in that the copper compound is a copper compound of the formula (II)

$$(R - X)_n\ Cu \qquad (II)$$

wherein R represents a hydrogen atom, an alkyl-, cycloalkyl-, aryl-, aralkyl group or a monovalent 5- or 6-membered ring, wherein each group can be substituted by at least one substituent, X stands for -COO, $-SO_4$, $-SO_3$, $-PO_4$ or -O and n is a whole number from 1 to 4.

3. Use according to Claim 1, characterised in that the copper compound is copper acetylacetonate.

4. Use according to Claim 1, characterised in that the copper compound is chlorophyll copper or chlorophyllin copper or copper hydroxide.

5. Use according to Claim 1, characterised in that the lead compound is a lead compound of the formula (III)

$$(R - X)_n\ Pb \qquad (III)$$

wherein R is a hydrogen atom, an alkyl-, cycloalkyl-, aryl-, aralkyl group, or a heterocyclic residue (wherein each group or the residue can be substituted by at least one substituent), X stands for -COO, $-SO_4$, $-SO_3$, $-PO_4$ or -O and n is a whole number from 1 to 4.

6. Use according to Claim 1, characterised in that the lead compound is lead acetylacetonate.

7. Use according to Claim 1, characterised in that the lead compound is chlorophyll lead or chlorophyllin lead or lead hydroxide.

8. Material absorbing in the near IR obtainable by heat treatment of the composition defined in one of Claims 1 to 7.

9. Shaped body absorbing in the near IR, characterised in that it comprises the material absorbing in the near IR in accordance with Claim 8.

**Revendications**

1. Utilisation d'une composition, qui contient au moins un composé thiourée de formule générale (I) et au moins un composé du cuivre et/ou du plomb:

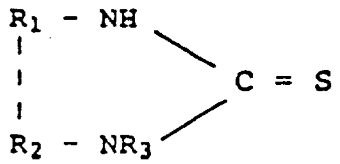

(I)

(dans laquelle $R_1$, $R_2$ et $R_3$ représentent chacun un atome d'hydrogène, un groupe alkyle, cycloalkyle, aryle, aralkyle, alcényle, ou un cycle monovalent à 5 ou 6 membres, chaque groupe pouvant être substitué par au moins un substituant, où $R_1$ et $R_2$ ou bien $R_2$ et $R_3$ peuvent former ensemble un cycle), pour la fabrication d'un matériau absorbant le proche IR après traitement thermique.

2. Utilisation selon la revendication 1, caractérisée en ce que le composé du cuivre est un composé du cuivre de formule (II),

$$(R - X)_n\,Cu \qquad (II)$$

dans laquelle R représente un atome d'hydrogène, un groupe alkyle, cycloalkyle, aryle, aralkyle ou un cycle monovalent à 5 ou 6 membres, chaque groupe pouvant être substitué par au moins un substituant,
X représente un radical -COO, $-SO_4$, $-SO_3$, -PO4 ou -O, n est un nombre entier compris entre 1 et 4.

3. Utilisation selon la revendication 1, caractérisée en ce que le composé du cuivre est l'acétylacétonate du cuivre.

4. Utilisation selon la revendication 1, caractérisée en ce que le composé du cuivre est la chlorophylle de cuivre, la chlorophylline de cuivre ou l'hydroxyde de cuivre.

5. Utilisation selon la revendication 1, caractérisée en ce que le composé du plomb est un composé du plomb de formule (III),

$$(R - X)_n\,Pb \qquad (III)$$

dans laquelle R représente un atome d'hydrogène, un groupe alkyle, cycloalkyle, aryle, aralkyle ou un reste hétérocyclique (chaque groupe pouvant être substitué par au moins un substituant), X représente un radical -COO, -SO4, -SO3, -PO4 ou -O, n est un nombre entier compris entre 1 et 4.

6. Utilisation selon la revendication 1, caractérisée en ce que le composé du plomb est l'acétylacétonate de plomb.

7. Utilisation selon la revendication 1, caractérisée en ce que le composé du plomb est la chlorophylle de plomb, la chlorophylline de plomb ou l'hydroxyde du plomb.

8. Matériau absorbant dans le proche infrarouge (IR) susceptible d'être obtenu par un traitement thermique du mélange défini dans une des revendications 1 à 7.

9. Corps moulé absorbant dans le proche IR caractérisé en ce qu'il comprend le matériau absorbant dans le proche IR selon la revendication 8.

Abbildung 1.

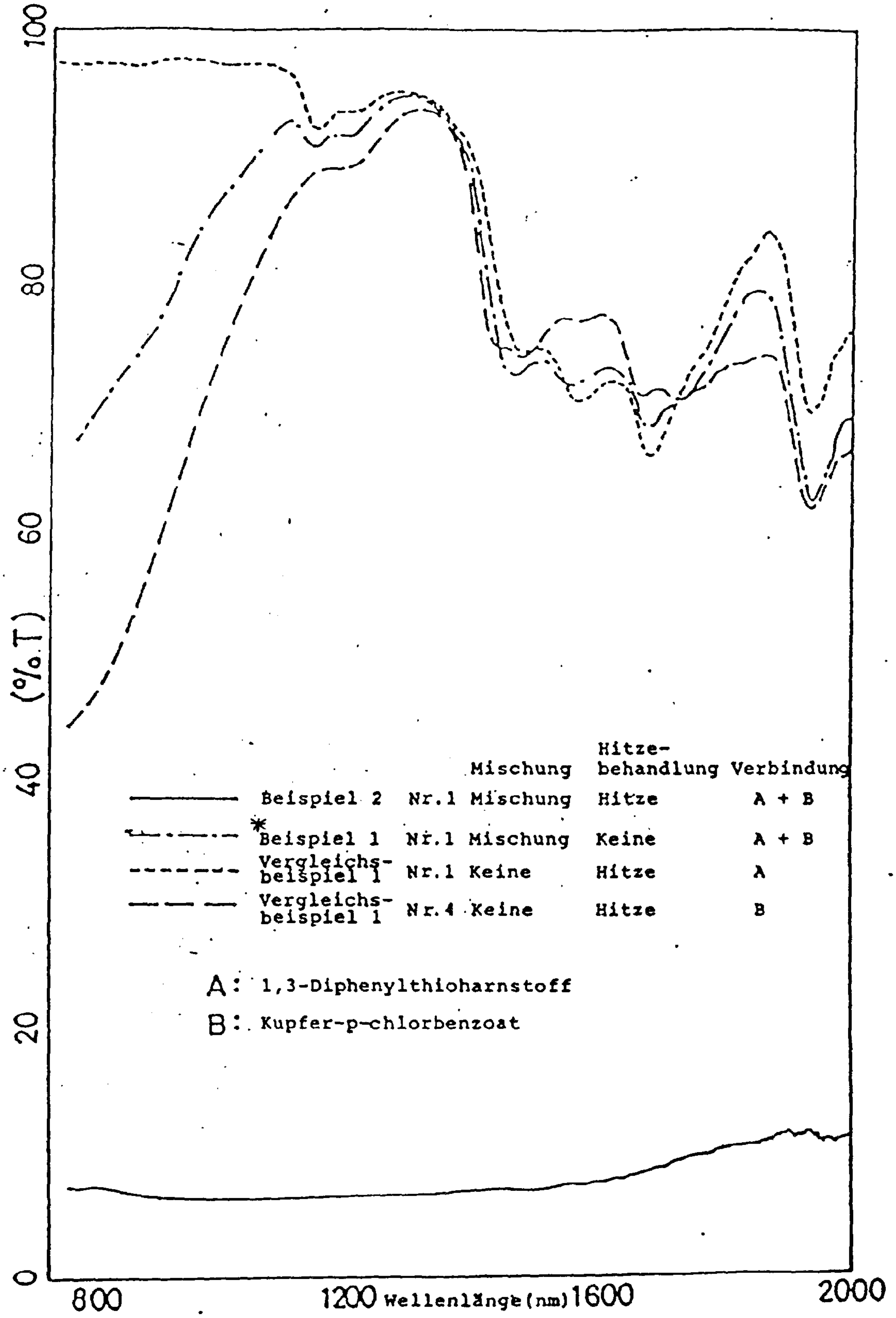
100
80
60
40
20
0
(%T)
800
1200 Wellenlänge (nm) 1600
2000
Mischung
Hitze-behandlung
Verbindung
Beispiel 2 Nr.1 Mischung Hitze A + B
*Beispiel 1 Nr.1 Mischung Keine A + B
Vergleichs-beispiel 1 Nr.1 Keine Hitze A
Vergleichs-beispiel 1 Nr.4 Keine Hitze B
A: 1,3-Diphenylthioharnstoff
B: Kupfer-p-chlorbenzoat

Abbildung 2

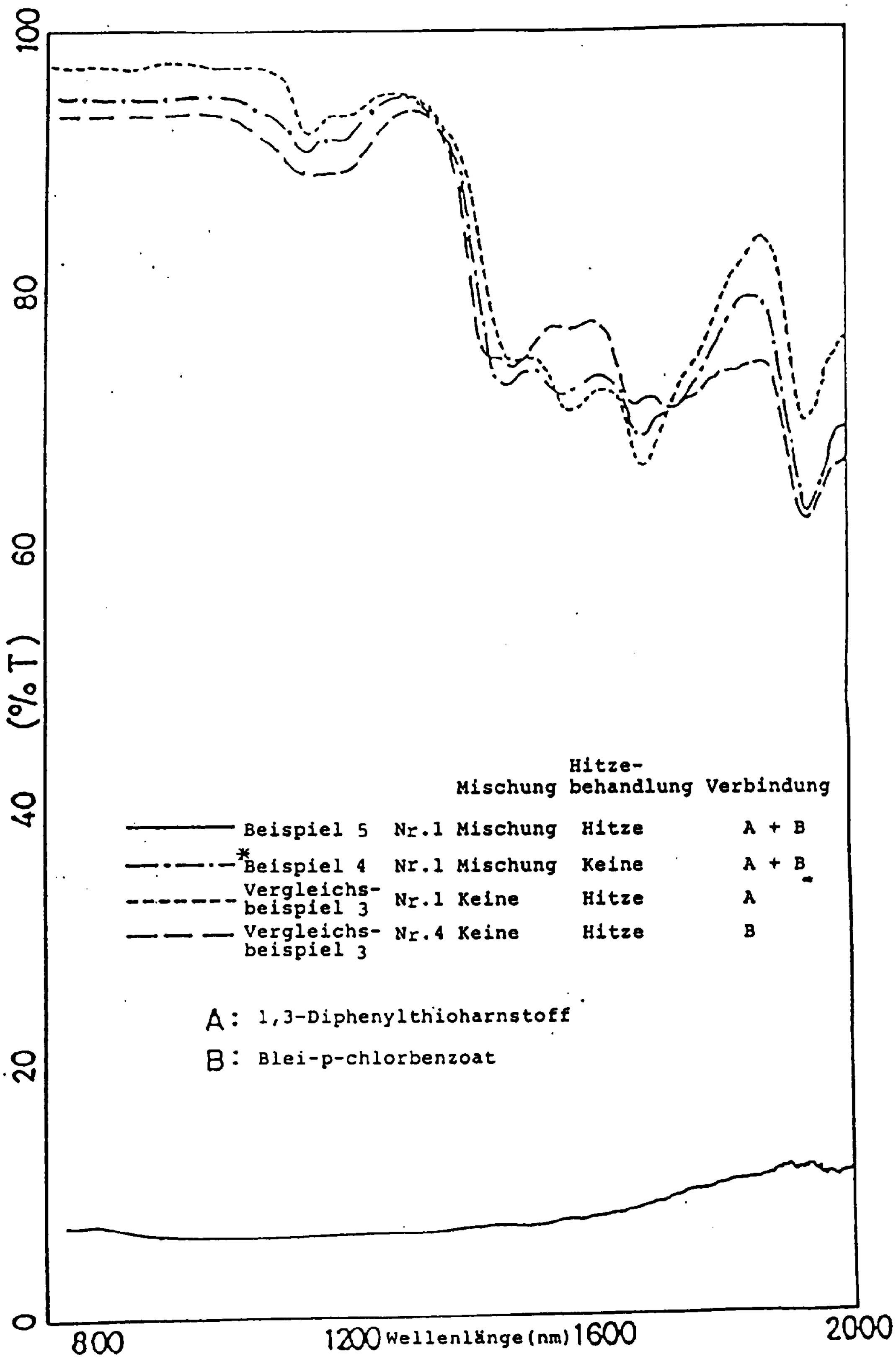
100
80
60
(%T)
40
20
0
800
1200
Wellenlänge (nm)
1600
2000
Mischung
Hitze-behandlung
Verbindung
Beispiel 5 Nr.1 Mischung Hitze A + B
*Beispiel 4 Nr.1 Mischung Keine A + B
Vergleichsbeispiel 3 Nr.1 Keine Hitze A
Vergleichsbeispiel 3 Nr.4 Keine Hitze B
A: 1,3-Diphenylthioharnstoff
B: Blei-p-chlorbenzoat